# EUROPÄISCHE PATENTSCHRIFT

(11) **EP 3 582 661 B1**
(45) Veröffentlichungstag und Bekanntmachung des Hinweises auf die Patenterteilung: **15.02.2023**
(21) Anmeldenummer: 17816677.3
(22) Anmeldetag: 11.12.2017
(51) Int. Cl.: A47J 27/08

(54) **SCHNELLKOCHTOPFDECKEL SOWIE SCHNELLKOCHTOPF**
PRESSURE COOKER LID AND PRESSURE COOKER
COUVERCLE D'AUTOCUISEUR ET AUTOCUISEUR

(30) Priorität: 15.02.2017 DE 102017202401
(43) Veröffentlichungstag der Anmeldung: 25.12.2019
(73) Patentinhaber: WMF GmbH, 73312 Geislingen/Steige (DE)
(72) Erfinder: MORMONE, Maria, 73329 Kuchen (DE); REINHARD, Dieter, 73326 Deggingen (DE)
(74) Vertreter: Pfenning, Meinig & Partner mbB
(86) Internationale Anmeldenummer: PCT/EP2017/082128
(87) Internationale Veröffentlichungsnummer: WO 2018/149534

(56) Entgegenhaltungen:
- EP-A1- 1 535 553
- WO-A1-2009/005182
- GB-A- 2 047 117

## Beschreibung

Die vorliegende Erfindung bezieht sich auf einen Schnellkochtopfdeckel gemäß des Oberbegriffs aus Anspruch 1 sowie auf einen Schnellkochtopf, der besagten Schnellkochtopfdeckel sowie ein Kochgefäß umfasst.

Schnellkochtöpfe sind bereits aus dem Stand der Technik bekannt. Dabei werden in der Regel diverse Funktionseinheiten im Deckelgriff des Schnellkochtopfdeckels untergebracht (beispielsweise eine Druckregeleinrichtung sowie ein Sicherheitsöffnungssystem). Da die Funktionseinheiten hintereinanderliegend untergebracht werden, benötigen Schnellkochtopfdeckel und Deckelgriff einen vergleichsweise großen Bauraum.

Zudem ergeben sich für die einzelnen Bauelemente herstellungsbedingt Bauteiltoleranzen. Unter anderem über die Druckregeleinrichtung werden solche Bauteiltoleranzen, die auch auf das Ventilelement wirken, aufgenommen. Hierdurch ergeben sich (gesehen relativ zum eigentlichen Ventilsitz) zusätzliche Druckschwankungen. Die Qualitätsschwankung in der Serienproduktion ist dadurch unerwünscht groß.

Aufgabe der vorliegenden Erfindung ist es daher, eine verbesserte Umsetzung der Steuerung von Funktionseinheiten, insbesondere eine verbesserte Zielkochdruckeinstellung zu realisieren. Dies soll möglichst kostengünstig umgesetzt werden, um in einer Serienproduktion von Schnellkochtöpfen bzw. Schnellkochtopfdeckeln Verwendung zu finden.

Diese Aufgabe wird durch einen Schnellkochtopfdeckel (nachfolgend abgekürzt auch als Deckel bezeichnet) gemäß Anspruch 1 sowie durch einen Schnellkochtopf gemäß Anspruch 7 gelöst. Vorteilhafte Ausführungsvarianten lassen sich den abhängigen Ansprüchen entnehmen. Die einzelnen Merkmale der abhängigen Ansprüche lassen sich dabei gemäß der Anspruchsstruktur jeweils in Kombination miteinander, jedoch auch einzeln verwirklichen. Insbesondere können einzelne der genannten Merkmale auch weggelassen werden oder auf andere Art und Weise als im nachfolgenden Ausführungsbeispiel gezeigt miteinander kombiniert werden.

Grundidee der Lösung ist zunächst Folgendes: Um eine Bauraumreduktion zu erreichen und um die gleichen Funktionen der Funktionseinheiten beizubehalten, wird aus einer Reihenansteuerung der Funktionseinheiten (bei der die einzelnen Funktionseinheiten relativ zur Steuerwelle gesehen hintereinander liegend angeordnet sind) auf eine Parallelansteuerung der Funktionseinheiten (bei der die einzelnen Funktionseinheiten längs besagter Welle gesehen auf derselben Höhe oder zumindest nahezu derselben Höhe angeordnet sind) umgestellt. Dabei umfasst eine der Funktionseinheiten die Kochdruckreglereinrichtung. Insbesondere können somit die Kochdruckregeleinrichtung (nachfolgend vereinfacht auch als Druckregeleinrichtung bezeichnet) und das Sicherheitsöffnungssystem (nachfolgend auch als SÖS abgekürzt) nebeneinander, bevorzugt beidseits der Steuerwelle, gelegt werden. Die Steuerkurve der Steuerwelle wird dabei entsprechend angepasst. Eine Reduzierung des Bauraums um die Hälfte ist somit möglich.

Alternativ oder zusätzlich wird zur optimalen Ansteuerung der Funktionseinheiten (hier: der Druckregeleinrichtung) ein Einstellelement in das obere Federgehäuse der Druckregeleinrichtung eingebaut. Hierdurch ist eine verbesserte Federkrafteinstellung ermöglicht. Dies egalisiert Bauteiltoleranzen, die bei der Serienproduktion ansonsten zu Qualitätsschwankungen des Endproduktes (Schnellkochtopfdeckel bzw. Schnellkochtopf) führen würden.

Ein erfindungsgemäßer Schnellkochtopfdeckel ist in Anspruch 1 beschrieben.

Die Anordnung der Kochdruckregeleinrichtung sowie des Funktionselements auf derselben Höhe kann insbesondere eine, mehrere oder auch alle der folgenden Bedeutungen haben: In Richtung bzw. entlang der Drehachse gesehen sind die Druckregeleinrichtung sowie das Funktionselement nicht hintereinander liegend positioniert. Das drehbare Maschinenelement kann so ausgebildet sein, dass die Druckregeleinrichtung sowie das Funktionselement mit ihm (mechanisch) parallel angesteuert werden (also gerade nicht in Reihe gesehen hintereinander bzw. seriell angesteuert werden). Es liegt eine mechanische Parallelschaltung bzw. Parallelanordnung der Kochdruckregeleinrichtung einerseits und des Funktionselements (insbesondere: SÖS) andererseits vor. Legt man durch die (Druck-)Regeleinrichtung und das Funktionselement (bzw. deren Schwerpunkte) eine Gerade, die nachfolgend als Verbindungsgerade bezeichnet ist, und projiziert man diese Verbindungsgerade und die Drehachse des drehbaren Maschinenelements gemeinsam auf eine Ebene, die senkrecht zu derjenigen Verbindungslinie ausgerichtet ist, die die Verbindungsgerade und die Drehachse mit minimalem Abstand verbindet, so gilt für den Winkel α zwischen der Projektion der Verbindungsgeraden auf diese Ebene einerseits und der Projektion der Drehachse auf diese Ebene andererseits Folgendes: α ≥ 45°, bevorzugt α ≥ 70°, bevorzugt α ≥ 80°, bevorzugt α ≥ 85°, besonders bevorzugt α = 90° (in letzterem Fall liegt also die Verbindungsgerade senkrecht zur Drehachse bzw. die beiden besagten Projektionen liegen senkrecht zueinander.

Das drehbare Maschinenelement kann auch mehrere eine Funktion des Funktionselements beeinflussende Parameter (die nachfolgend mit dem Buchstaben P abgekürzt werden) einstellen. Der/die Parameter P kann/können auch mehrere Funktionen des Funktionselements beeinflussen. Eine/die Funktion des Funktionselements beeinflussen kann dabei insbesondere bedeuten, dass der/die Parameter eine solche Funktion einstellen, verstellen, auslösen, steuern und/oder regeln kann/können. Beispiel: Das Funktionselement kann das Sicherheitsöffnungssystem SÖS des Schnellkochtopfdeckels sein. Das drehbare Maschinenelement kann eine Welle sein, die einen mit dem SÖS verbundenen Zeitgeber (Timer) verstellen kann, z. B. hinsichtlich einer Zeitdauer als P.

In einer ersten Alternative dazu (oder auch in Kombination damit, d.h. es werden mehrere Funktionselemente bzw. deren Parameter mit dem drehbaren Maschinenelement eingestellt bzw. beeinflusst) kann das Funktionselement ein System zum sanften Abdampfen aus dem Schnellkochtopf sein. Der zugehörige Parameter kann eine Verschlussstellung und/oder ein Öffnungsgrad sein.

In einer zweiten Alternative (oder auch in Kombination mit dem vorangehend Beschriebenen, d.h. es werden mehrere Funktionselemente bzw. deren Parameter mit dem drehbaren Maschinenelement eingestellt bzw. beeinflusst) kann das Funktionselement ein System zur (Schnellkoch)Topfverriegelung sein. Der zugehörige Parameter kann eine axiale Verschiebung bzw. eine Stellung derselben sein.

In einer dritten Alternative (oder auch in Kombination mit dem vorangehend Beschriebenen, d.h. es werden mehrere Funktionselemente bzw. deren Parameter mit dem drehbaren Maschinenelement eingestellt bzw. beeinflusst) kann das Funktionselement ein System zur Fixierung von Kochstufeneinstellungen sein. Der zugehörige Parameter kann eine Winkellage sein.

In einer vierten Alternative (oder auch in Kombination mit dem vorangehend Beschriebenen, d.h. es werden mehrere Funktionselemente bzw. deren Parameter mit dem drehbaren Maschinenelement eingestellt bzw. beeinflusst) kann das Funktionselement ein System zur Indikationsanzeige, ob der Schnellkochtopf momentan offen ist oder verschlossen ist, sein. Der zugehörige Parameter kann eine Winkellage oder eine axiale Verschiebung bzw. eine Stellung derselben sein.

Einen weiteren erfindungsgemäßen Schnellkochtopfdeckel beschreibt Anspruch 2.

Dabei kann die Feinjustierung bereits beim Herstellen des Deckels bzw. beim Zusammenbau der Bauelemente desselben durchgeführt werden. Die Grobeinstellung eines Zielkochdrucks bzw. Kochdrucks kann später beim Betrieb des fertig zusammengebauten Deckels bzw. druckdicht verschlossenen Schnellkochtopfs durch einen Anwender erfolgen: Dazu kann beispielsweise das drehbare Maschinenelement in verschiedene Positionen gedreht werden, die jeweils unterschiedlichen gewünschten Zielkochdrücken entsprechen. (Für alle Ausführungsformen der vorliegenden Erfindung gilt somit, dass mittels des drehbaren Maschinenelements bzw. der Welle auch mehrere voneinander jeweils verschiedene Werte des Kochdrucks einstellbar sein können.)

Die Feinjustierung kann insbesondere dem Ausgleich von Bauteiltoleranzen von Bauteilen der Kochdruckregeleinrichtung dienen, so dass beispielsweise auch preiswertere Bauteile mit höheren herstellungsbedingten mechanischen Toleranzen verwendet werden können: Beispielsweise können beim Vorsehen einer solchen Feinjustiereinrichtung günstigere Federn (die beispielsweise höhere Toleranzen in ihrer Federkonstante aufweisen können) für die Kochdruckregeleinrichtung verwendet werden.

Im späteren Betrieb kann also mittels des drehbaren Maschinenelements auf Basis einer mittels der Feinjustiereinrichtung beim Herstellen vorgenommenen Vorjustierung des Zielkochdruckwertes letzterer optimal eingestellt werden. So ist es z. B. möglich, den Deckel auf die tatsächlich vorhandene Federkonstante des konkret verwendeten Federexemplars abzustimmen. Damit können - trotz der bei industrieller Massenfertigung auftretenden Bauteiltoleranzen - für jede Drehstellung bei allen gebauten Deckelexemplaren (zumindest nahezu) konstante bzw. gleiche Zielkochdruckwerte des drehbaren Maschinenelements realisiert werden. Siehe dazu beispielsweise auch das nachfolgende Ausführungsbeispiel.

Bevorzugt ist dabei, dass jeweils genau eine Kochdruckregeleinrichtung, ein Sicherheitsöffnungssystem, ein drehbares Maschinenelement, ein Verstellelement (vgl. nachfolgend), ein Deckelgriff und ein Deckelkörper vorhanden ist.

Bei jedem erfindungsgemäßen Deckel kann das drehbare Maschinenelement eine (mechanische) Welle bzw. ein stabförmiges Maschinenelement, das zum Weiterleiten von Drehbewegungen und/oder Drehmomenten und/oder zur Lagerung von rotierenden Teilen ausgebildet ist, sein. In der Regel weist der Deckel genau ein solches gemeinsames Element bzw. genau eine solche gemeinsame Welle auf. Das drehbare Maschinenelement ist in der Regel ein Bauelement des Deckelgriffs bzw. in diesem angeordnet.

Bei jedem erfindungsgemäßen Deckel kann der Zielkochdruck derjenige Kochdruck beim mittels des Deckels druck- bzw. fluiddicht verschlossenen Schnellkochtopf sein, der sich innerhalb des Schnellkochtopfes einstellt bzw. einstellen soll (also der vom Anwender bzw. Benutzer gewünschte Dampfdruck zum Garen des Kochguts). Das drehbare Maschinenelement kann so ausgebildet werden, dass über Drehen desselben in unterschiedliche Positionen (Dreh- bzw. Rotationspositionen um die Drehachse) mehrere unterschiedliche Kochdrücke einstellbar sind, die zuvor bei der Herstellung des Deckels jeweils mittels eines/des Verstellelements auf die konkret eingesetzten Bauteile der Kochdruckregeleinrichtung (insbesondere: auf die Feder der Kochdruckregeleinrichtung) feinjustiert werden können.

Der/die Kochdruck/Kochdrücke und/oder die Funktion(en) des Funktionselements kann/können über das drehbare Maschinenelement mechanisch unmittelbar oder mechanisch mittelbar (letzteres beispielsweise über (eine) Nocke(n), (einen) Exzenter, (einen) Kipphebel, ..., vgl. hierzu das Ausführungsbeispiel) eingestellt werden.

Bei jedem erfindungsgemäßen Deckel kann/können die Kochdruckregeleinrichtung und/oder das Funktionselement Bauelemente bzw. Baugruppen des Deckelgriffs und/oder des Deckelkörpers, in der Regel anteilig des Deckelgriffs und anteilig des Deckelkörpers, sein.

Weitere vorteilhafterweise realisierbare Merkmale lassen sich Anspruch 3 entnehmen.

Die Kochdruckregeleinrichtung und das Funktionselement können beidseits des drehbaren Maschinenelements bzw. der Welle angeordnet sein, können somit also in einander gegenüberliegenden Halbräumen positioniert sein (wobei das drehbare Maschinenelement bzw. dessen Drehachse in der diese Halbräume trennenden Ebene liegt bzw. verläuft).

Jedoch können die Druckregeleinrichtung und das Funktionselement auch auf ein und derselben Seite des drehbaren Maschinenelements (bzw. in ein und demselben Halbraum) und, von der Drehachse aus in Radialrichtung weg gesehen, hintereinander liegend positioniert werden. Es können dann beispielsweise zwei ineinander geschachtelte oder übereinander liegend positionierte Kipphebel unterschiedlicher Länge realisiert sein, von denen einer die Druckregeleinrichtung und der andere das Funktionselement (jeweils mittelbar oder unmittelbar) mechanisch einstellen kann. Die Parallelschaltung der Druckregeleinrichtung und des Funktionselements (insbesondere: des SÖS) kann somit auch seitlich des drehbaren Maschinenelements auf genau einer Seite desselben realisiert werden.

Weitere vorteilhafterweise realisierbare Merkmale lassen sich Anspruch 4 entnehmen.

Dabei kann der Exzenter eine Nocke sein, das drehbare Maschinenelement also eine Nockenwelle. Der Exzenter bzw. die Nocke kann als radial auskragender Abschnitt ein Teil des drehbaren Maschinenelements sein. Dieses Maschinenelement und der Exzenter bzw. die Nocke können also einstückig ausgebildet sein. Es ist aber auch möglich, den Exzenter bzw. die Nocke als ein separates Bauelement auszubilden, das dann an dem drehbaren Maschinenelement fixiert sein kann.

Es kann also genau ein gemeinsamer Exzenter bzw. eine Nocke auf oder an dem drehbaren Maschinenelement realisiert sein, mittels dessen bzw. derer mechanisch sowohl ein/der Zielkochdruck der Kochdruckregeleinrichtung, als auch ein/der eine/die Funktion des Funktionselements beeinflussender Parameter P einstellbar ist.

Ebenso kann das drehbare Maschinenelement auch mehrere Exzenter bzw. Exzenterabschnitte aufweisen, wobei beispielsweise mit einem davon die Kochdruckregeleinrichtung und mit einem anderen davon das Funktionselement einstellbar ist.

Weitere vorteilhafterweise realisierbare Merkmale sind in Anspruch 5 beschrieben.

Vorzugsweise ist/sind der/die Kipphebel ein Teil des Deckelgriffs bzw. im Deckelgriff ausgebildet.

Weitere vorteilhafterweise realisierbare Merkmale lassen sich dem Anspruch 6 entnehmen.

Ein erfindungsgemäßer Schnellkochtopf lässt sich Anspruch 7 entnehmen.

Nachfolgend wird die vorliegende Erfindung anhand eines Ausführungsbeispiels beschrieben. Dabei zeigen:
Figur 1 eine Aufsicht auf einen Schnellkochtopfdeckelabschnitt aus dem Stand der Technik.
Figuren 2 bis 4 eine Aufsicht sowie Schnittansichten durch Abschnitte eines erfindungsgemäßen Schnellkochtopfdeckels.
Figuren 5 bis 8 zeigen Beispiele für (einen) Parameter bzw. (eine) Funktion(en), der/die einzeln oder auch zusammen in beliebigen Kombinationen mittels des drehbaren Maschinenelements (hier: eine Nockenwelle) über eine Drehbewegung um seine Drehachse mechanisch einstellbar bzw. beeinflussbar ist/sind.

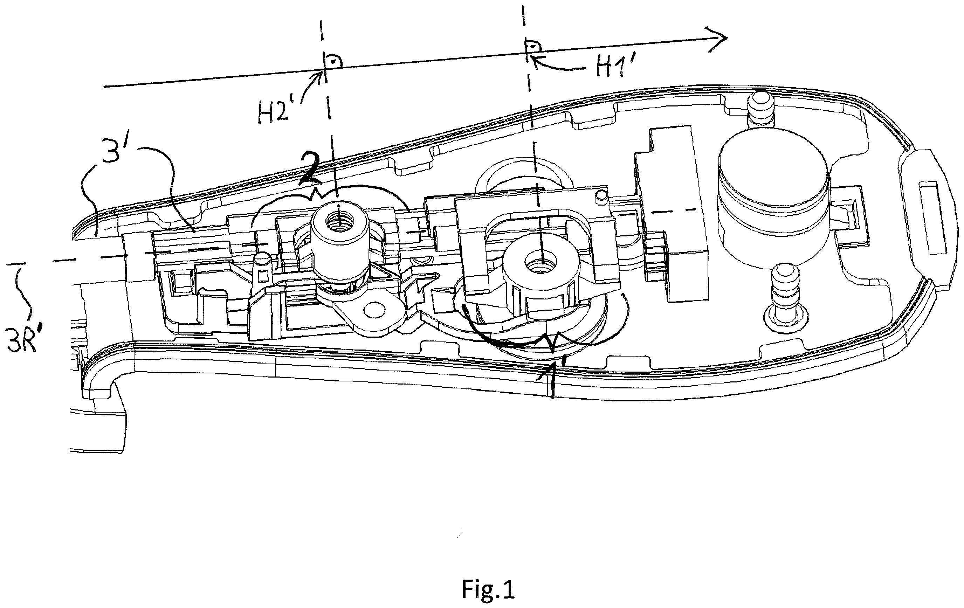

Figur 1 zeigt eine Aufsicht auf einen Ventilträger eines Deckelgriffs eines Schnellkochtopfdeckels aus dem Stand der Technik. Die Kochdruckregeleinrichtung dieses Deckels ist mit 1' bezeichnet, das Sicherheitsöffnungssystem mit 2'. Eine zwei Exzenter aufweisende Exzenterwelle 3' (deren Drehachse mit 3R' bezeichnet ist) steuert mechanisch über Kipphebel die Funktion der Kochdruckregeleinrichtung 1' und des SÖS 2'. Diese Funktionssteuerung betrifft bei der Kochdruckregeleinrichtung 1' die Steuerung des Zielkochdrucks p_{z} im Topfinneren, wenn der Schnellkochtopfdeckel ein komplementär dazu ausgebildetes Kochgefäß druckdicht verschließt (nicht gezeigt). Figur 1 ist zu entnehmen, dass entlang der Drehachse 3R' der Exzenterwelle 3' gesehen (diese Richtung lässt sich auch als Höhenrichtung bezeichnen, so dass die Höhe H eines Bauelements des Schnellkochtopfdeckels seine Lage entlang der Drehachse 3R' angibt) das Sicherheitsöffnungssystem 2' und die Kochdruckregeleinrichtung 1' hintereinander und beabstandet voneinander angeordnet sind. Das SÖS 2' ist auf einer der Höhe H2' angeordnet, beabstandet davon (in Höhenrichtung H) ist die Kochdruckregeleinrichtung 1' auf der Höhe H1' positioniert. Dies hat den Nachteil, dass der Deckelgriff aufgrund seiner mechanischen Reihenschaltung bzw. aufgrund der mechanischen Reihenansteuerung der beiden Funktionseinheiten 1' und 2' einen vergleichsweise langen Bauraum benötigt.

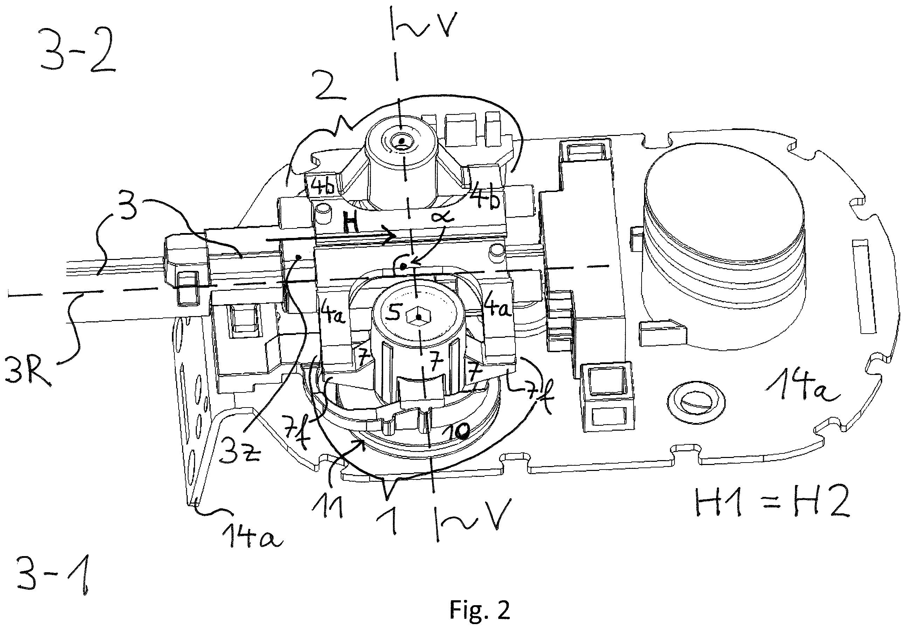

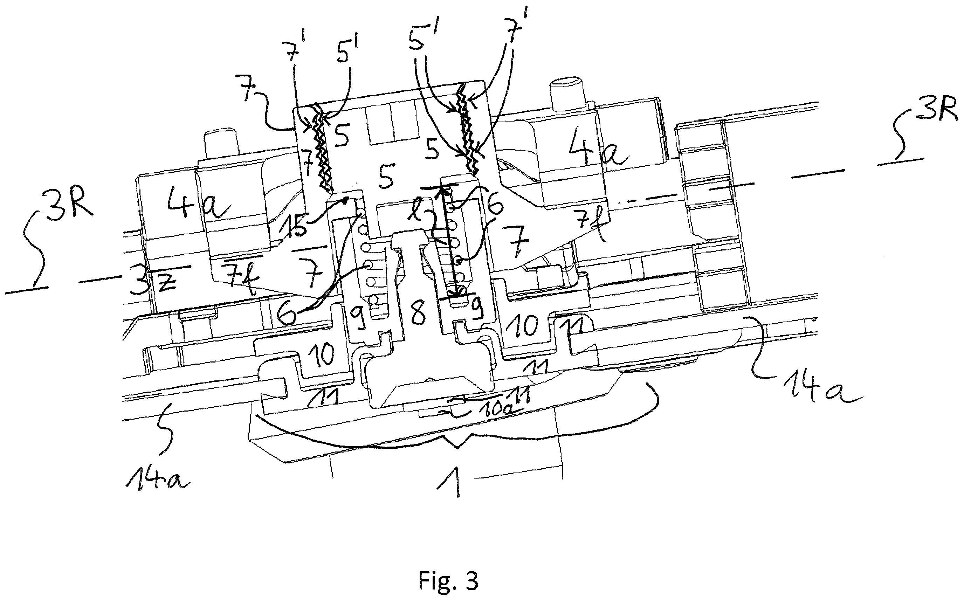

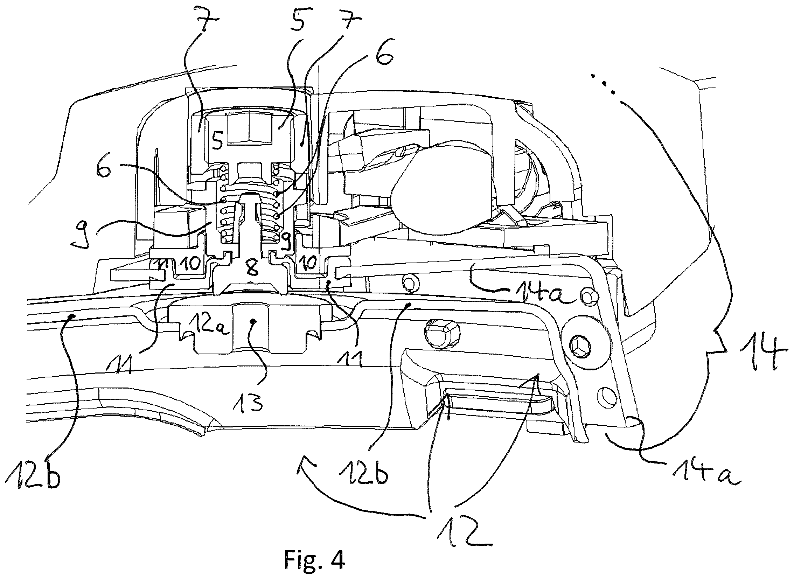

Im Gegensatz dazu zeigen die Figuren 2 bis 4 eine Aufsicht (Fig. 2) sowie zwei Schnittansichten (Fig. 3 und Fig. 4) auf die erfindungswesentlichen Bauteile eines erfindungsgemäßen Schnellkochtopfdeckels bzw. durch einen solchen Schnellkochtopfdeckel. Dabei ist eine längliche, im Wesentlichen stab- bzw. zylinderförmige Exzenterwelle 3 drehbar auf einem Ventilträger 14a des Deckelgriffs 14 des Deckels. Gesehen entlang der Achsrichtung der Drehachse 3R der Welle 3 gesehen liegen erfindungsgemäß die Kochdruckregeleinrichtung 1 und das SÖS als Funktionselement 2 - anders als im Stand der Technik - nicht hintereinander, sondern beidseits bzw. auf sich gegenüberliegenden Seiten der Drehachse 3R auf derselben Höhe H (Höhenrichtung identisch mit Achsrichtung 3R). Verbindet man gedanklich den Schwerpunkt der Kochdruckregeleinrichtung 1 und den Schwerpunkt des SÖS 2, so erhält man die Verbindungsgerade V (siehe Fig. 2). Besagtes Parallelschalten bzw. Parallelansteuern der Funktionseinheiten 1 und 2 bedeutet nun, dass die Verbindungsgerade V die Rotationsachse 3R senkrecht schneidet. Genauer gesagt, schneidet die Projektion der Verbindungsgeraden V auf die Ebene des Ventilträgers 14a die Projektion der Rotationsachse 3R auf besagte Ebene senkrecht. Der Winkel α beträgt somit 90°.

Betrachtet man eine Ebene, die senkrecht zur Ebene des Ventilträgers 14a verläuft und in der die Drehachse 3R liegt (diese Ebene sei nachfolgend als Halbraumebene bezeichnet), so verläuft die Verbindungsgerade V senkrecht zur Halbraumebene und die beiden Funktionseinheiten 1 und 2 liegen beidseits der Halbraumebene in unterschiedlichen Halbräumen 3-1 und 3-2. Im Halbraum 3-1 ist die Kochdruckregeleinrichtung 1 positioniert, wohingegen im Halbraum 3-2 das SÖS 2 positioniert ist. Beide Funktionseinheiten 1 und 2 sind dabei jeweils beabstandet von der Halbraumebene positioniert.

Ein erfindungswesentlicher Punkt ist somit, dass diese beiden Funktionseinheiten 1 und 2 auf derselben Höhe H entlang der Drehachse 3R gesehen beidseits der Halbraumebene angeordnet sind, dass somit H1 identisch mit H2 ist, wobei H1 die Höhe bzw. Lage der Kochdruckregeleinrichtung 1 und H2 die Höhe bzw. Lage des SÖS 2 in Richtung entlang der Rotationsachse 3R gesehen bezeichnet. Die mechanische Beeinflussung der Funktionseinheiten 1, 2 vermittels der Exzenterwelle 3 bzw. das mechanische Einstellen des Zielkochdrucks der Kochdruckregeleinrichtung 1 und eines Parameters P (hier: einer Zeitdauer eines Zeitgebers des SÖS 2 bzw. eines mit dem SÖS 2 als Teil desselben in Verbindung stehenden Zeitgebers) geschieht dabei wie folgt.

Auf Höhe H der Verbindungsgeraden V bzw. der Funktionseinheiten 1 und 2 weist die Exzenterwelle 3 genau einen Exzenter 3z auf. Im ersten Halbraum 3-1 ist ein erster Kipphebel 4a beweglich am Ventilträger 14a fixiert. Im zweiten Halbraum 3-2 ist ein zweiter Kipphebel 4b beweglich am Ventilträger 14a fixiert.

Dreht ein Benutzer im Betrieb des Schnellkochtopfes die Exzenterwelle 3 um ihre Drehachse 3R, so bewirkt der Exzenter 3z (sofern dieser in eine zur mechanischen Einflussnahme auf die Druckregeleinrichtung 1 geeigneten Drehstellung um 3R herum gesehen gestellt wird bzw. entlang eines Abschnitts einer Rotationstrajektorie um 3R herum bewegt wird) ein mechanisches Anheben (also ein Bewegen von der Ebene des Ventilträgers 14a weg) der der Halbraumebene zugewandten Seite des ersten Kipphebels 4a. Hierdurch bzw. durch die Gelenklagerung des Kipphebels 4a (nicht erkennbar) wird ein Absenken (also ein Bewegen zur Ebene des Ventilträgers 14a hin) der der Halbraumebene abgewandten Seite dieses Kipphebels 4a bewirkt. Durch dieses Absenken drückt die der Halbraumebene abgewandt liegende Seite des ersten Kipphebels 4a auf zwei (in Bezug auf die Verbindungsgerade V gesehen) außen liegende Flügel 7f eines Aufnahmeelements 7 der Kochdruckregeleinrichtung 1, wodurch dieses Aufnahmeelement 7 zur Ventilträgerebene 14a hin bewegt wird. Diese Bewegung erfolgt gegen die Federkraft eines Druckaufnahmeelements 6, das hier eine Feder 6 ist (in Fig. 2 nicht sichtbar, vgl. Figuren 3 und 4), wodurch der vom Benutzer gewünschte Kochdruck p_{z} vorgewählt bzw. eingestellt werden kann. Dies wird nachfolgend noch detailliert anhand der Figuren 3 und 4 beschrieben.

Ganz analog erfolgt ein mechanisches Beeinflussen der Funktion des SÖS 2 vermittels des zweiten Kipphebels 4b: Dreht der Benutzer die Welle 3 und somit auch den Exzenter 3z in eine geeignete Position bzw. entlang eines geeigneten Trajektorienabschnitts um die Drehachse 3R, so wird die der Halbraumebene zugewandte Seite des Kipphebels 4b angehoben, durch analoge Gelenklagerung des Hebels 4b hierdurch die der Halbraumebene abgewandt liegende Seite des Hebels 4b abgesenkt, wodurch schließlich die beiden Flügel (nicht gezeigt) des Aufnahmeelements des SÖS 2 zur Ebene des Ventilträgers 14a hin gedrückt werden. Letzteres bewirkt ein Einstellen einer Zeitdauer P des Zeitgebers (nicht gezeigt) am SÖS 2.

Figuren 3 und 4 zeigen den inneren Aufbau der Kochdruckregeleinrichtung 1 des Schnellkochtopfdeckels und die Funktionsweise des Einstellens des Zielkochdrucks dieser Einrichtung 1 im Detail.

Die Kochdruckregeleinrichtung 1 weist eine Feinjustiereinrichtung auf, die die Bauelemente 5, 6 und 7 umfasst. Neben den bereits erwähnten, beidseits vom Zentrum des Aufnahmeelements 7 entlang der Achsrichtung 3R gesehen auskragenden Flügeln 7f weist das Aufnahmeelement 7 auf seiner dem Ventilträger 14a abgewandten Oberseite ein Innengewinde (Schraubgewinde) 7' auf. Formschlüssig bzw. komplementär dazu ist eine Schraube 5 als Verstellelement ausgebildet, d. h. diese Schraube 5 weist auf ihrer Außenseite ein Außengewinde 5' auf, das komplementär zum Innengewinde 7' ausgebildet ist. Die Schraube 5 kann somit mit ihrem Außengewinde 5' in das Innengewinde 7' des Aufnahmeelements 7 am oberen Ende desselben eingeschraubt werden. Die Unterseite der Schraube 5 bzw. des Kopfes derselben weist einen Vorsprung auf, der im Wesentlichen zylindersymmetrisch um die Längsachse der Schraube 5 und so ausgebildet ist, dass die Oberseite einer Druckfeder 6 an dieser Unterseite ein Gegenlager findet.

Die untere Seite des Aufnahmeelementes 7 weist (um die zentrale Längsachse des Elements 7, die mit den zentralen Längsachsen der Elemente 5, 6 und 8 zusammen fällt, herum gesehen) eine zylindrische Bohrung auf, die der Aufnahme eines im Wesentlichen hohlzylindrischen Federhalters 9 dient: Der Federhalter 9 kann von unten, also von der dem Ventilträger 14a zugewandten Seite, in die in das Aufnahmeelement 7 eingebrachte Bohrung eingeschoben werden. Das Aufnahmeelement 7 dient als Federgehäuse für das als Druckfeder 6 ausgebildete Druckaufnahmeelement: Während die Oberseite der Feder 6 an der Unterseite des Schraubenkopfes der Schraube 5 anliegt, liegt das untere Ende der Druckfeder 6 im Inneren des Federhalters 9 an dessen Bodenfläche an (der Halter 9 weist somit an seinem oberen Ende eine zur Aufnahme der Feder 6 ausgebildete Bohrung auf). Die Druckfeder 6 ist somit zwischen der Schraube 5 einerseits und dem Federhalter 9 andererseits eingespannt.

Zwischen der Oberseite des Federhalters 9 einerseits und der Unterseite des Schraubenkopfs 5 andererseits ist ein Hohlraum 15 vorhanden, der es ermöglicht, dass sich (bei fest in das Federgehäuse 7 eingeschraubter Schraube 5) der Federhalter 9 entgegen der Federkraft der Druckfeder 6 innerhalb des Hohlraums im Federgehäuse 7 nach oben, also zur Schraube 5 hin, und (bei nachlassender Federspannung der Feder 6) wieder in die entgegengesetzte Richtung, also nach unten zum Ventilträger 14 hin, bewegen kann.

An seinem unteren Ende umgibt den Federhalter 9 ein im Wesentlichen ringförmiges Aufstandselement 10, das an seinem unteren Ende mehrere Füße 10a aufweist. Mit diesen Füßen 10a (in Fig. 3 ist nur ein einzelner Fuß 10a sichtbar) steht das Aufstandselement 10 auf dem Deckelkörper 12 bzw. dem Ringspalt 12a desselben (vgl. Fig. 4) auf. Der Ringspalt 12a ist dabei im Bereich der Kochdruckregeleinrichtung 1 in die Deckelkörperplatte 12b des Deckelkörpers 12 eingepasst bzw. an dieser Platte 12b fixiert.

Eine ringförmige Dichtung 11 aus Silikon oder Gummi zwischen dem näherungsweise ringförmigen Hauptkörper des Aufstandselements 10 einerseits und dem Deckelkörper 12 bzw. dem Ringspalt 12a desselben andererseits sorgt für die Abdichtung des Ventils der Kochdruckregeleinrichtung 1 bzw. dafür, dass ein Druck größer als der umgebende Atmosphärendruck bzw. der Zielkochdruck innerhalb des fluiddicht verschlossenen Schnellkochtopfes aufrecht erhalten werden kann.

Ein Ventilelement 8 dieses Ventils sitzt dazu auf dem Fachmann bekannte Art und Weise im Zentrum der Kochdruckregeleinrichtung 1 zwischen dem Federhalter 9 einerseits und dem Ringspalt 12a andererseits. Dabei werden innenliegende Abschnitte der Ringdichtung 11 zwischen dem Federhalter 9 und der unten liegenden Basis des Ventilelements 8 eingepresst. Die in Bezug auf die Ventilachse gesehen radial außen liegenden Abschnitte der Dichtung 11 übernehmen eine Dichtfunktion zwischen dem Ventilträger 14a einerseits und dem Ringspalt 12a bzw. dem Deckelkörper 12 andererseits. Dabei weist die Dichtung 11 an den Positionen der Füße 10a jeweils Durchgangsbohrungen so auf, dass die nach unten hin vorstehenden Füße 10a des Aufstandselements 10 die Dichtung 11 nach unten hin, also zum Deckelkörper 12 hin, jeweils durchstoßen und über die Dichtung 11 hin überstehen. Schließlich weist der Ringspalt 12a in seinem Zentrum, also im Bereich des Ventilelements 8, eine Durchgangsbohrung 13 zum Druckablass auf.

Die Funktionsweise des Ventils bzw. der Kochdruckregeleinrichtung 1 ist somit wie folgt: Steigt der Kochdruck innerhalb des geschlossenen Schnellkochtopfes über den Zielkochdruck an, gilt also p > p_{z}, so wirkt von unten über die Durchgangsbohrung 13 eine Druckkraft auf das unten liegende Ende des Ventilelementes 8, die größer ist, als die vermittels sowohl der Grobjustiereinrichtung 3z, 4a, 7 im Groben als auch der Feinjustiereinrichtung 5, 6, 7 im Feinen voreingestellte Federkraft (Vorspannung) der Druckfeder 6. In diesem Fall wird das Ventilelement 8 samt Federhalter 9 und unterem Ende der Feder 6 entgegen der Federkraft der Feder 6 nach oben gedrückt: Über die Durchgangsbohrung 13 sowie den durch das vorangehend beschriebene Anheben des Ventilelements 8 nach oben zwischen dem Ringspalt 12a einerseits und dem unteren Ende des Ventilelements 8 andererseits eröffneten Spalte kann Druck p aus dem Inneren des Schnellkochtopfes entweichen. Der Druck im Topf bleibt also nahezu konstant auf dem Wert p ≈ p_{z}.

Die Grobjustierung und die Feinjustierung des Zielkochdrucks p_{z} erfolgen wie folgt.

Die Formen, Positionen und Größen des Exzenters 3z, des Kipphebels 4a, des Federgehäuses 7, des Ventilelements 8, des Federhalters 9, des Aufstandselementes 10, der Dichtung 11 und des Deckelkörpers 12 bzw. des Ringspalts 12a desselben sind aufeinander wie folgt abgestimmt. Dreht der Anwender die Welle 3 um die Achse 3R in eine Stellung, die einen gewünschten Kochdruck definiert, so drückt der Exzenter 3z die der Halbraumebene abgewandt liegende, also den beiden Flügeln 7f zugewandt liegende Seite des Kipphebels 4a zur Ebene von 14a hin. Diese mechanische Bewegung gibt das Element 7 weiter: Das nach unten gedrückte Federgehäuse 7 (bzw. dessen Flügelenden 7f) presst mechanisch die Feder 6 zusammen, drückt die Feder 6 also auf eine definierte Länge I zusammen (definierte Längsausdehnung I der Feder 6 entsprechend des vom Anwender gewählten Zielkochdrucks, vgl. Fig. 3).

Gemäß der Federkonstanten der Feder 6 entspricht diese Länge I einer definierten Gegenkraft, die durch das Ventilelement 8 aufgewendet werden muss, um die Feder entgegen dieser Federkraft weiter zusammenzudrücken. Erhöht sich somit der Druck p innerhalb des geschlossenen Schnellkochdruckes über den Zielwert p_{z} bzw. so stark, dass besagte Federkraft überwunden wird, so wird Druck über die Durchgangsbohrung 13 und über besagten, sich zwischen den Elementen 8 und 12a, also zwischen dem Ventilträger 14a einerseits und dem Deckelkörper 12 andererseits, eröffnenden Ringspalt abgelassen. Der Kochdruck wird somit auf dem vom Benutzer gewählten Zielkochdruck p_{z} gehalten, nachdem der entsprechende Druckaufbau durch Erwärmen des Schnellkochtopfes abgeschlossen ist.

Da herstellungsbedingt Federn 6 leicht unterschiedliche Federkonstanten aufweisen können, kann bereits während des Herstellungsprozesses die Schraube 5 mehr oder weniger stark in das Federgehäuse 7 von oben eingeschraubt werden, um eventuelle Fertigungstoleranzen der Feder 6 bzw. deren Federkonstanten auszugleichen (Ändern der Vorspannung der Feder 6). Damit ist es durch die Feinjustiereinrichtung 5, 6, 7 bzw. das Verstellsystem 5, 7 und das Druckaufnahmeelement 6 derselben/desselben ermöglicht, herstellungsbedingt von Schnellkochtopf zu Schnellkochtopf bzw. von Feder zu Feder auftretende Schwankungen des Zielkochdruckes p_{z} auf einfache Art und Weise frühestmöglich auszugleichen. Es kann somit sichergestellt werden, dass bei jedem hergestellten Schnellkochtopfdeckel bzw. Schnellkochtopf eine definierte Stellung der Welle 3 auch jeweils immer genau demselben Zielkochdruck p_{z} entspricht.

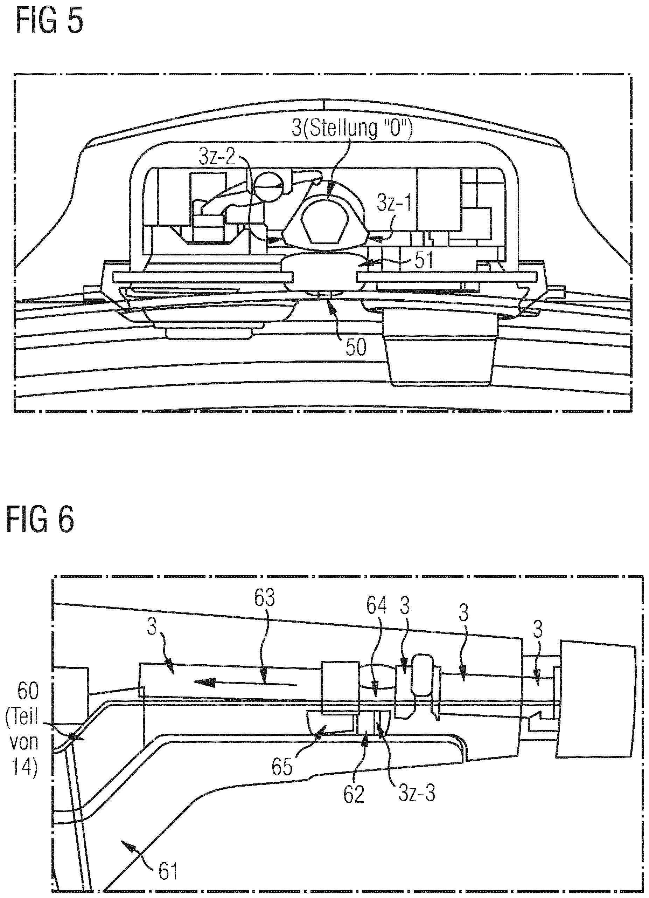

Figur 5 zeigt eine erste Alternative (der Begriff der "Alternative" bezieht sich hier auf das in den Figuren 2 bis 4 Gezeigte, bei dem das Funktionselement dem Sicherheitsöffnungssystem 2 des Schnellkochtopfdeckels entspricht), wie mittels einer/der drehbaren Exzenter- bzw. Nockenwelle 3 mechanisch als Parameter ein Öffnungsgrad zwischen einer kleinen Öffnung im Deckel bzw. Deckelkörper desselben einerseits und einer Silikon-Membran andererseits eingestellt werden kann. Dieser Parameter beeinflusst die Funktion eines Systems zum sanften Abdampfen aus dem Schnellkochtopf als Funktionselement.

Das Funktionselement bzw. dieses System umfasst dabei besagte kleine Öffnung im Deckelkörper (Bezugszeichen 50) sowie besagte Silikon-Membran 51.

Die Funktionsweise ist wie folgt: Beim sanften Abdampfen wird die kleine Öffnung 50 im Deckelkörper 12 des Schnellkochtopfdeckels durch die Silikon-Membran 51 geöffnet und wieder verschlossen. Durch Drehen der Nockenwelle 3 (um die Drehachse 3R, vgl. dazu Figur 2, bei der allerdings das Funktionselement ein/das Sicherheitsöffnungssystem ist) in die jeweilige Kochstufe "Eins" oder "Zwei" wird die kleine Öffnung 50 mittels der Nocke 3z-1 bzw. der Nocke 3z-2 der Nockenwelle 3 verschlossen. Beim Zurückdrehen der Nockenwelle 3 aus der jeweiligen Kochstufe "Eins" bzw. "Zwei" auf die in Figur 5 gezeigte Nullstellung "0" wird die kleine Öffnung 50 am Schnellkochtopfdeckel bzw. im Deckelkörper 12 desselben geöffnet und es kann ein geringer Dampfstrom aus dem Schnellkochtopf bzw. dem Kochgefäß desselben (nicht gezeigt) entweichen. Ein sanftes und langsames Abdampfen des Schnellkochtopfes kann dadurch realisiert werden.

Figur 6 zeigt eine weitere Alternative für ein Funktionselement bzw. einen Parameter desselben. Bei dieser Alternative ist das Funktionselement ein System zur Topfverriegelung. Der dazu gehörige Parameter, der die Funktion dieses Funktionselementes beeinflusst, ist eine axiale Verschiebung der Nockenwelle 3.

Mithilfe der Nockenwelle 3 wird ein Verstellstein 62 im Gefäß- bzw. Topfgriff 61 (hier nur ausschnittsweise gezeigt) so verschoben, dass sich der Deckelgriff 14 (hier ist ein Ausschnitt 60 desselben gezeigt) bzw. der ganze Schnellkochtopfdeckel gegen ein Aufdrehen verschließt. Hierbei wird die Nockenwelle 3 axial, vgl. hierzu den Pfeil 63 in Figur 6 (dieser symbolisiert die axiale Verschiebung als Parameter) nach vorne verschoben. Der Verstellstein 62 ist in einer Art breiten Rille 64 geführt und wird durch die axiale Verschiebung 63 in die gleiche Richtung mitgeführt. Hierdurch wird der Nocken 3z-3 der Nockenwelle auf dem Verstellstein 62 in eine geschlossene Kammer 65 am Deckelgriff 14, 60 eingeschoben und ist fixiert. Der Deckelgriff 14 ist somit starr mit dem Topfgriff 61 verbunden und kann nicht mehr verdreht werden. Ein Öffnen des Schnellkochtopfdeckels ist dann nicht mehr möglich.

Das Funktionselement umfasst hierbei die Bauteile 62, 64 und 65.

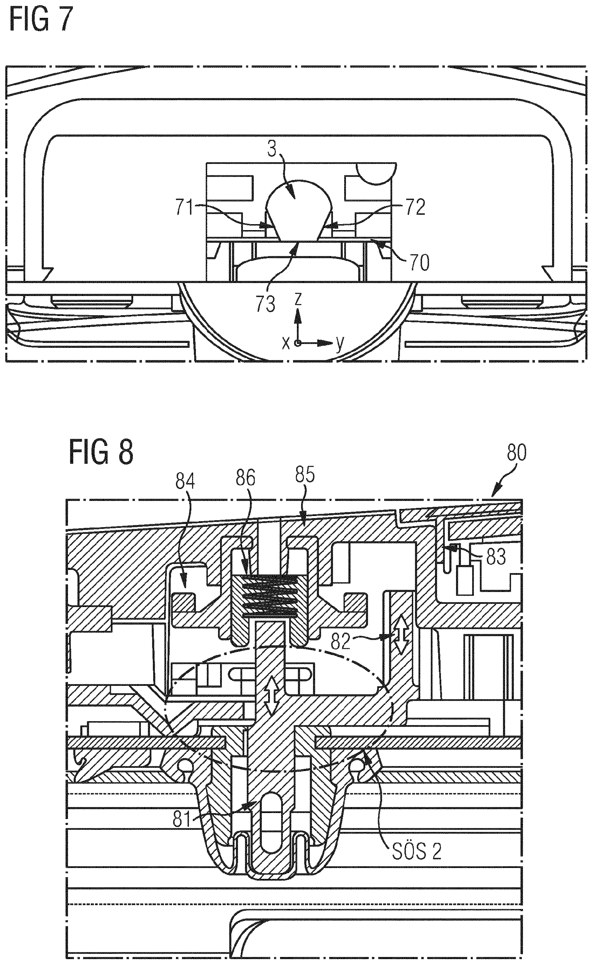

Eine weitere, dritte Alternative zeigt Figur 7: Bei dieser ist das Funktionselement ein System zum Fixieren von Kochstufeneinstellungen. Der zugehörige, die Funktion dieses Funktionselementes beeinflussende Parameter ist eine Winkellage.

Mittels des Funktionselementes aus Figur 7 sind Rastpositionen für zwei Kochstufen, nämlich die Kochstufe "Eins" und die Kochstufe "Zwei" fixierbar. Durch die gezeigte Rastfunktion wird die Kochstufeneinstellung in der jeweiligen Kochstufenposition fixiert. Dies wird erreicht, indem eine Flachfeder 70 auf eine ebene Fläche an der Nockenwelle 3 drückt (vgl. dazu die ebenen Flächen 71, 72 und 73). Die drei ebenen Flächen 71 bis 73 am Maschinenelement bzw. der Nockenwelle 3 sind entsprechend der Drehpositionen für die Kochstufen "Eins" und "Zwei" sowie die Null-Stellung in den entsprechenden Winkellagen angeordnet. Die Fläche 71 entspricht dabei der Kochstufe "Eins", die Fläche 72 der Kochstufe "Zwei" und die Fläche 73 der Null-Position bzw. der Null-Stellung.

Durch die Wirkung der Niederhaltekraft der Feder 70 auf die jeweilige Fläche wird die Nockenwelle 3 in der entsprechenden Position gehalten. Nur mit entsprechendem Kraftaufwand durch ein Drehen der Nockenwelle 3 durch einen Benutzer kann dieser Niederhaltekraft entgegengewirkt werden und somit ein Verdrehen der Nockenwelle 3 ermöglicht werden.

Das Funktionselement umfasst somit bei der Alternative aus Figur 7 die Bauteile 70 bis 73.

In einer weiteren Alternative (in keiner der Figuren gezeigt) ist das Funktionselement ein System zu einer Indikationsanzeige, ob der Schnellkochtopf momentan offen oder verschlossen ist. Der zugehörige Parameter kann eine Winkellage oder auch eine axiale Verschiebung bzw. eine Stellung der Nockenwelle sein. Umgesetzt werden kann eine solche Indikationsanzeige erfindungsgemäß mittels der Nockenwelle über eine Farbmarkierung auf der Nockenwelle, wobei die Nockenwelle durch (z.B. axiales) Verschieben (ggfs. alternativ auch durch Verdrehen um die Rotationsachse der Nockenwelle) in einen anderen Farbbereich wechseln kann. Der Farbwechsel kann beispielsweise über ein Fenster im Deckelgriff angezeigt werden.

Figur 8 zeigt schließlich, wie zum in den Figuren 2 bis 4 gezeigten Ausführungsbeispiel beim Sicherheitsöffnungssystem als Funktionselement bzw. bei einem Zeitgeber am Sicherheitsöffnungssystem als Funktionselement 2 der die Funktion des Funktionselements beeinflussende Parameter eingestellt werden kann. Der Zeitgeber wird dabei alternativ auch als Timer bezeichnet und ist mit dem Bezugszeichen 80 versehen.

Der Timer 80 reagiert auf eine Veränderung eines Magnetfeldes und verarbeitet Daten bzgl. der Magnetfeldveränderung z.B. in einem Logarithmus. Der Timer kann die Daten beispielsweise in einem Display (nicht gezeigt) des Timers für den Benutzer ausgeben.

Hierzu kann die Hubveränderung des SÖS 2 (durch eine Druckerhöhung im verschlossenen Schnellkochtopf kann sich ein/der Stößel 81 des SÖS 2 nach oben bewegen) ausgenutzt werden. Dabei ist im Stößel 81 ein Magnet 82 (z.B. Permanentmagnet) integriert, welcher sich dann mit nach oben bewegt. Das Magnetfeld wird somit verschoben und ein Hall-Sensor 83 im Timer 80 erkennt diese Veränderung. Die Kontaktstellen zwischen Timer 80 und Magnet 82 können somit kontaktlos gestaltet werden.

Um eine gleiche Hubverstellung bei den Kochstufen "Eins" und "Zwei" zu erhalten, wird das Verstellprinzip analog wie bei der Druckregeleinrichtung 1 angewendet. Mit anderen Worten kann über einen Exzenter an der Welle 3 ein Betätigungselement (hier: Wippe 84) angesteuert werden, mit dem/der dann die Niederdruckkräfte (vgl. auch die Feder 86) mittels einer Hülse 85 auf den Stößel 81 verändert werden. Somit kann die Hubbewegung bei allen Kochstufen gleich gestaltet werden. Dies kann erforderlich sein, wenn der Timer 80 (wie hier) auf derselben Position fixiert ist.

Dabei kann der Timer 80 eingeschaltet werden (beispielsweise über Drücken einer Taste) und die gewünschte Kochzeit kann eingegeben werden (ebenfalls durch ein Tastendrücken). Nach Erreichen des gewünschten Kochdrucks (Magnet ist oben) kann der Timer automatisch zum Countdown gestartet werden. Gleichzeitig kann akustisch (z.B. über einen Piepston) darauf aufmerksam gemacht werden. Ist die Kochzeit abgelaufen, kann erneut akustisch darauf aufmerksam gemacht werden. Der Timer 80 kann noch eine optische Anzeige haben, um die Drucksituation im Schnellkochtopf (z.B. über Leuchtdioden Rot/Grün) anzuzeigen. Ab einer gewissen Hubverstellung des Stößels 81 (vgl. den Magnet 82) wird auf Rot (Druck im Schnellkochtopf vorhanden) oder auf Grün (Schnellkochtopfinneres drucklos) gewechselt.

## Patentansprüche

1. Schnellkochtopfdeckel mit
einem Deckelgriff (14),
einem Deckelkörper (12),
einer Kochdruckregeleinrichtung (1) sowie einem Funktionselement (2) und
einem drehbaren Maschinenelement (3), mittels dessen über eine Drehbewegung um seine Drehachse (3R) mechanisch sowohl ein Zielkochdruck p_{z} der Kochdruckregeleinrichtung (1) als auch ein eine Funktion des Funktionselements (2) beeinflussender Parameter einstellbar ist,
wobei die Kochdruckregeleinrichtung (1) und das Funktionselement (2) in Richtung der Drehachse (3R) gesehen auf derselben Höhe (H) angeordnet sind,
**dadurch gekennzeichnet, dass** bei einer Projektion einer die Kochdruckregeleinrichtung (1) mit dem Funktionselement verbindenden Verbindungsgeraden und der Drehachse (3R) auf eine Ebene, die senkrecht zu einer die Verbindungsgerade und die Drehachse (3R) mit minimalem Abstand verbindenden Verbindungslinie ausgerichtet ist, für den Winkel α zwischen der Projektion der Verbindungsgeraden auf diese Ebene und der Projektion der Drehachse (3R) auf diese Ebene Folgendes gilt: α ≥ 45°.

2. Schnellkochtopfdeckel nach dem vorhergehenden Anspruch,
***dadurch gekennzeichnet, dass***
die Kochdruckregeleinrichtung (1) eine Feinjustiereinrichtung (5, 6, 7) aufweist, mit der mechanisch eine Feinjustierung eines mittels des drehbaren Maschinenelements (3) einstellbaren oder eingestellten Zielkochdrucks p_{z} der Kochdruckregeleinrichtung (1) ermöglicht ist.

3. Schnellkochtopfdeckel nach einem der vorhergehenden Ansprüche, ***dadurch gekennzeichnet, dass***
die Kochdruckregeleinrichtung (1) und das Funktionselement (2) nicht nur in Richtung der Drehachse (3R) gesehen auf derselben Höhe (H), sondern auch auf einander gegenüberliegenden Seiten (3-1, 3-2) des drehbaren Maschinenelements (3) angeordnet sind.

4. Schnellkochtopfdeckel nach einem der vorhergehenden Ansprüche, ***dadurch gekennzeichnet, dass***
das drehbare Maschinenelement (3) eine mindestens einen Exzenter (3z) aufweisende Exzenterwelle ist oder umfasst,
wobei bei Drehung der Exzenterwelle um ihre Drehachse (3R) mittels des Exzenters (3z) mechanisch ein/der Zielkochdruck p_{z} der Kochdruckregeleinrichtung (1) einstellbar ist, bevorzugt mittels des Exzenters (3z) mechanisch sowohl ein/der Zielkochdruck p_{z} der Kochdruckregeleinrichtung (1) als auch ein/der eine Funktion des Funktionselements (2) beeinflussende(r) Parameter einstellbar ist.

5. Schnellkochtopfdeckel nach dem vorhergehenden Anspruch,
***gekennzeichnet durch***
ein oder mehrere Betätigungselement(e) (4a, 4b), das/die bevorzugt als Kipphebel ausgebildet ist/sind, wobei bei Drehung der Exzenterwelle um ihre Drehachse (3R) der/ein Exzenter (3z) der Exzenterwelle mechanisch das/ein Betätigungselement (4a) betätigt und hierdurch mechanisch mittelbar über dieses Betätigungselement (4a) einen/den Zielkochdruck p_{z} der Kochdruckregeleinrichtung (1) einstellt,
wobei bevorzugt bei Drehung der Exzenterwelle um ihre Drehachse (3R) der/ein Exzenter (3z) der Exzenterwelle mechanisch sowohl ein erstes Betätigungselement (4a) betätigt und hierdurch mechanisch mittelbar über dieses erste Betätigungselement (4a) einen/den Zielkochdruck p_{z} der Kochdruckregeleinrichtung (1) einstellt, als auch mechanisch ein zweites Betätigungselement (4b) betätigt und hierdurch mechanisch mittelbar über dieses zweite Betätigungselement (4b) einen/den eine Funktion des Funktionselements (2) beeinflussenden Parameter einstellt.

6. Schnellkochtopfdeckel nach einem der vorhergehenden Ansprüche, ***dadurch gekennzeichnet, dass***
das Funktionselement (2) ein/das Sicherheitsöffnungssystem des Schnellkochtopfdeckels für einen letzteren umfassenden Schnellkochtopf oder ein mit diesem Sicherheitsöffnungssystem verbundenes Bauelement, insbesondere ein Zeitgeber, ist,
wobei im Fall eines Zeitgebers als Funktionselement (2) der die Funktion des Funktionselements (2) beeinflussende Parameter bevorzugt eine Zeitdauer ist.

7. Schnellkochtopf umfassend
einen Schnellkochtopfdeckel gemäß einem der vorhergehenden Ansprüche und
ein Kochgefäß, das einen Gefäßgriff aufweist,
wobei der Deckelgriff (14) und der Gefäßgriff korrespondierend zueinander so ausgebildet sind, dass das Kochgefäß mit dem Schnellkochtopfdeckel mittels eines Verschlussmechanismus fluiddicht verschließbar ist, indem der Deckelgriff (14) und der Gefäßgriff übereinander gestellt werden.

## Claims

1. A pressure cooker lid with
a lid handle (14),
a lid body (12),
a cooking pressure control device (1) and a functional element (2) and
a rotatable machine element (3), by means of which both a target cooking pressure p_{z} of the cooking pressure control device (1) and a parameter influencing a function of the function element (2) can be set mechanically via a rotary movement about its axis of rotation (3R),
wherein the cooking pressure control device (1) and the functional element (2) are arranged at the same height (H) as seen in the direction of the axis of rotation (3R),
**characterized in that**, when a connecting straight line connecting the cooking pressure control device (1) to the functional element and the axis of rotation (3R) are projected onto a plane which is perpendicular to a connecting line connecting the connecting straight line and the axis of rotation (3R) at a minimum distance, the following applies to the angle α between the projection of the connecting straight line onto this plane and the projection of the axis of rotation (3R) onto this plane: α ≥45°.

2. The pressure cooker lid according to the preceding claim,
***characterized in that***
the cooking pressure control device (1) has a fine adjustment device (5, 6, 7) with which a fine adjustment of a target cooking pressure p_{z} of the cooking pressure control device (1), which can be set or is set by means of the rotatable machine element (3), is mechanically possible.

3. The pressure cooker lid according to any one of the preceding claims,
***characterized in that***
the cooking pressure control device (1) and the functional element (2) are arranged not only at the same height (H) as seen in the direction of the axis of rotation (3R), but also on opposite sides (3-1, 3-2) of the rotatable machine element (3).

4. The pressure cooker lid according to any one of the preceding claims,
***characterized in that***
the rotatable machine element (3) is or comprises an eccentric shaft having at least one eccentric (3z),
wherein upon rotation of the eccentric shaft about its axis of rotation (3R) by means of the eccentric (3z) a/the target cooking pressure p_{z} of the cooking pressure control device (1) can be mechanically set, preferably by means of the eccentric (3z) mechanically both a/the target cooking pressure p_{z} of the cooking pressure control device (1) and a/the parameter(s) influencing a function of the functional element (2) can be set.

5. The pressure cooker lid according to the preceding claim,
***characterized by***
one or more actuating element(s) (4a, 4b), which is/are preferably in the form of a rocker arm, wherein upon rotation of the eccentric shaft about its axis of rotation (3R) the/an eccentric (3z) of the eccentric shaft mechanically actuates the/an actuating element (4a) and thereby mechanically indirectly sets a/the target boiling pressure p_{z} of the cooking pressure control device (1) via this actuating element (4a),
wherein, preferably, upon rotation of the eccentric shaft about its axis of rotation (3R), the/an eccentric (3z) of the eccentric shaft mechanically both actuates a first actuating element (4a) and thereby mechanically indirectly sets, via this first actuating element (4a), a/the target cooking pressure p_{z} of the cooking pressure control device (1), and also mechanically actuates a second actuating element (4b) and thereby mechanically indirectly sets, via this second actuating element (4b), a/the parameter influencing a function of the functional element (2).

6. The pressure cooker lid according to any one of the preceding claims,
***characterized in that***
the functional element (2) is a/the safety opening system of the pressure cooker lid for a pressure cooker comprising the latter or a component connected to this safety opening system, in particular a timer,
wherein, in the case of a timer as a functional element (2), the parameter influencing the function of the functional element (2) is preferably a time duration.

7. A pressure cooker comprising
a pressure cooker lid according to any one of the preceding claims, and
a cooking vessel that has a vessel handle,
wherein the lid handle (14) and the vessel handle are formed corresponding to each other in such a way that the cooking vessel can be closed fluid-tight with the pressure cooker lid by means of a closing mechanism, by placing the lid handle (14) and the vessel handle on top of each other.

## Revendications

1. Couvercle d'autocuiseur avec
une poignée de couvercle (14),
un corps de couvercle (12),
un dispositif de régulation de pression de cuisson (1) ainsi qu'un élément fonctionnel (2) et
un élément de machine rotatif (3), au moyen duquel, par un mouvement de rotation autour de son axe de rotation (3R), aussi bien une pression de cuisson cible p_{z} du dispositif de régulation de pression de cuisson (1) qu'un paramètre influençant une fonction de l'élément fonctionnel (2) peuvent être réglés mécaniquement,
dans lequel le dispositif de régulation de pression de cuisson (1) et l'élément fonctionnel (2) sont disposés à la même hauteur (H), vu dans la direction de l'axe de rotation (3R),
**caractérisé en ce que**, lorsqu'une droite de liaison reliant le dispositif de régulation de pression de cuisson (1) à l'élément fonctionnel et l'axe de rotation (3R) sont projetés sur un plan qui est orienté perpendiculairement à une ligne de liaison reliant la droite de liaison et l'axe de rotation (3R) avec une distance minimale, l'angle α entre la projection de la droite de liaison sur ce plan et la projection de l'axe de rotation (3R) sur ce plan est tel que : α ≥ 45°.

2. Couvercle d'autocuiseur selon la revendication précédente,
***caractérisé en ce que***
le dispositif de régulation de pression de cuisson (1) présente un dispositif de réglage fin (5, 6, 7), avec lequel un réglage fin d'une pression de cuisson cible p_{z} du dispositif de régulation de pression de cuisson (1) pouvant être réglée ou ajustée au moyen de l'élément de machine rotatif (3) est permis mécaniquement.

3. Couvercle d'autocuiseur selon l'une quelconque des revendications précédentes,
***caractérisé en ce que***
le dispositif de régulation de pression de cuisson (1) et l'élément fonctionnel (2) sont disposés non seulement à la même hauteur (H), vu dans la direction de l'axe de rotation (3R), mais également sur des côtés (3-1, 3-2) opposés l'un à l'autre de l'élément de machine rotatif (3).

4. Couvercle d'autocuiseur selon l'une quelconque des revendications précédentes,
***caractérisé en ce que***
l'élément de machine rotatif (3) est ou comprend un arbre à excentrique présentant au moins un excentrique (3z),
dans lequel, lors de la rotation de l'arbre à excentrique autour de son axe de rotation (3R), une/la pression de cuisson cible p_{z} du dispositif de régulation de pression de cuisson (1) peut être réglée mécaniquement au moyen de l'excentrique (3z), de préférence aussi bien une/la pression de cuisson cible p_{z} du dispositif de régulation de pression de cuisson (1) qu'un/le paramètre influençant une fonction de l'élément fonctionnel (2) peuvent être réglés mécaniquement au moyen de l'excentrique (3z).

5. Couvercle d'autocuiseur selon la revendication précédente,
***caractérisé par***
un ou plusieurs élément(s) d'actionnement (4a, 4b), qui est/sont réalisé(s) de préférence sous la forme d'un levier basculant, dans lequel, lors de la rotation de l'arbre à excentrique autour de son axe de rotation (3R), le/un excentrique (3z) de l'arbre à excentrique actionne mécaniquement le/un élément d'actionnement (4a) et règle ainsi mécaniquement et indirectement, par l'intermédiaire de cet élément d'actionnement (4a), une/la pression d'ébullition cible p_{z} du dispositif de régulation de pression d'ébullition (1),
dans lequel de préférence, lors de la rotation de l'arbre à excentrique autour de son axe de rotation (3R), le/un excentrique (3z) de l'arbre à excentrique actionne mécaniquement aussi bien un premier élément d'actionnement (4a) et règle ainsi mécaniquement et indirectement par l'intermédiaire de ce premier élément d'actionnement (4a) une/la pression de cuisson cible p_{z} du dispositif de régulation de pression de cuisson (1), ainsi qu'actionne mécaniquement un deuxième élément d'actionnement (4b) et règle ainsi mécaniquement et indirectement, par l'intermédiaire de ce deuxième élément d'actionnement (4b), un/le paramètre influençant une fonction de l'élément fonctionnel (2).

6. Couvercle d'autocuiseur selon l'une quelconque des revendications précédentes,
***caractérisé en ce que***
l'élément fonctionnel (2) est un/le système d'ouverture de sécurité du couvercle d'autocuiseur pour un autocuiseur comprenant ce dernier ou un composant relié à ce système d'ouverture de sécurité, en particulier une minuterie,
dans lequel, dans le cas d'une minuterie comme élément fonctionnel (2), le paramètre influençant la fonction de l'élément fonctionnel (2) est de préférence une durée.

7. Autocuiseur comprenant
un couvercle d'autocuiseur selon l'une quelconque des revendications précédentes et
un récipient de cuisson, qui présente une poignée de récipient,
dans lequel la poignée du couvercle (14) et la poignée du récipient sont réalisées en correspondance l'une avec l'autre, de sorte que le récipient de cuisson peut être fermé de manière étanche aux fluides avec le couvercle d'autocuiseur au moyen d'un mécanisme de fermeture, du fait que la poignée du couvercle (14) et la poignée du récipient sont placées l'une sur l'autre.
